# EUROPEAN PATENT APPLICATION

(11) **EP 4 691 854 A1**
(43) Date of publication of application: **11.02.2026**
(21) Application number: 24825280.1
(22) Date of filing: 20.06.2024
(51) Int. Cl.: B60R 11/00, G01S 7/481, G01S 17/88

(54) **LIDAR BRACKET AND VEHICLE**

(30) Priority: 20.06.2023 CN 202310734501
(71) Applicant: Fuyao Glass Industry Group Co., Ltd., Fuqing, Fujian 350300 (CN)
(72) Inventor: CHEN, Bingjing, Fuzhou, Fujian 350300 (CN); GUO, Yong, Fuzhou, Fujian 350300 (CN); LI, Weijun, Fuzhou, Fujian 350300 (CN)
(74) Representative: Mewburn Ellis LLP
(86) International application number: PCT/CN2024/100252
(87) International publication number: WO 2024/260392

(57) **Abstract**

The disclosure provides a LiDAR bracket (170) and a vehicle (100), which can avoid external environmental factors from affecting detection of a LiDAR (130), thereby improving detection accuracy of the LiDAR. The LiDAR bracket (170) includes a base plate (21), a side plate (22), and a fixing plate (23). One end of the side plate (22) is fixedly connected to a peripheral side face of the base plate (21), the side plate (22) and the base plate (21) are arranged to surround and define a box space, the fixing plate (23) is fixedly connected to another end of the side plate (22) away from the base plate (21), the fixing plate (23) extends in a direction away from the box space, the LiDAR (130) is operable to be fixedly connected to the base plate (21) and received within the box space, and the fixing plate (23) is configured to be fixedly connected to an inside of a vehicle body (110) of the vehicle (100).

## Description

### CROSS-REFERENCE TO RELATED APPLICATION(S)

This application claims priority to Chinese Patent Application No. 202310734501.1, filed June 20, 2023 to China national intellectual property administration (CNIPA) and entitled "LIDAR BRACKET AND VEHICLE", the entire disclosure of which is incorporated herein by reference.

### TECHNICAL FIELD

The disclosure relates to the field of automotive technology, and in particular, to a LiDAR bracket and a vehicle.

### BACKGROUND

Light detection and ranging (LiDAR) can perceive environmental information around a vehicle through laser detection, thereby assisting the vehicle in road surface recognition and natural environment recognition, and enhancing the environmental perception capability of the vehicle. However, the existing LiDAR is prone to be interfered by external environmental factors, which affects the detection of the LiDAR and reduces the detection accuracy of the LiDAR.

### SUMMARY

Embodiments of the disclosure provide a LiDAR bracket and a vehicle, which can avoid external environmental factors from affecting detection of a LiDAR, thereby improving detection accuracy of the LiDAR.

In the first aspect, a LiDAR bracket is provided. The LiDAR bracket is used for mounting of a LiDAR located inside a vehicle. The LiDAR bracket includes a base plate, a side plate, and a fixing plate. One end of the side plate is fixedly connected to a peripheral side face of the base plate, the side plate and the base plate are arranged to surround and define a box space, the fixing plate is fixedly connected to another end of the side plate away from the base plate, the fixing plate extends in a direction away from the box space, the LiDAR is operable to be fixedly connected to the base plate and received within the box space, and the fixing plate is configured to be fixedly connected to an inside of a vehicle body of the vehicle.

In some embodiments of the disclosure, the peripheral side face of the base plate includes a first side face and a second side face, and the side plate includes a first side sub-plate and a second side sub-plate. The first side sub-plate is fixedly connected to the first side face, and the second side sub-plate is fixedly connected to the second side face. The fixing plate includes a first fixing plate and a second fixing plate. The first fixing plate is fixedly connected to another end of the first side sub-plate away from the base plate, the first fixing plate extends in the direction away from the box space, the second fixing plate is fixedly connected to another end of the second side sub-plate away from the base plate, and the second fixing plate extends in the direction away from the box space. When the LiDAR bracket is mounted to the vehicle, both the first fixing plate and the second fixing plate are fixedly connected to the inside of the vehicle body of the vehicle.

In some embodiments of the disclosure, the side plate further includes a third side sub-plate, the third side sub-plate is fixedly connected to and located between the first side sub-plate and the second side sub-plate and spaced apart from the base plate.

In some embodiments of the disclosure, the base plate further includes a first face, a second face, and a vibration-damping through-hole. The vibration-damping through-hole penetrates through the first face and the second face, the LiDAR is fixedly connected to the first face and at least partially covers the vibration-damping through-hole.

In some embodiments of the disclosure, a ratio of an area of the vibration-damping through-hole to an area of the first face ranges from 1/4 to 2/3.

In some embodiments of the disclosure, a noise, vibration, and harshness (NVH) performance value measured for the LiDAR is greater than or equal to 25 dB, and a ratio of an area of the vibration-damping through-hole to an area of the first face ranges from 1/2 to 2/3.

In some embodiments of the disclosure, an NVH performance value measured for the LiDAR is less than 25 dB, and a ratio of an area of the vibration-damping through-hole to an area of the first face ranges from 1/4 to 1/2.

In some embodiments of the disclosure, a ratio of an area of the first face to an area of a face of the LiDAR facing the first face ranges from 0.5 to 1.5.

In some embodiments of the disclosure, the side plate is substantially perpendicular to the base plate, and the fixing plate is substantially perpendicular to the side plate.

In some embodiments of the disclosure, the LiDAR bracket is made of metal or thermoplastic resin, and the base plate, the side plate, and the fixing plate are integrally formed.

In some embodiments of the disclosure, the base plate further defines at least three mounting through-holes, the at least three mounting through-holes are arranged along a periphery of the base plate and spaced apart from each other, and each of the at least three mounting through-holes penetrates through the base plate in a thickness direction of the base plate.

In a second aspect, a vehicle is further provided in the disclosure. The vehicle includes a vehicle body, a window glass, a LiDAR, and the LiDAR bracket according to any one of the above embodiments. The LiDAR bracket is mounted to the inside of the vehicle body, the window glass is mounted to an opening of the vehicle body, the LiDAR is mounted to the LiDAR bracket, the LiDAR faces the window glass, and the LiDAR is configured to emit detection signals through the window glass and receive reflected detection signals through the window glass.

In some embodiments of the disclosure, a weight of the LiDAR is greater than or equal to 500 g, and/or a volume of the LiDAR is greater than or equal to that defined by 300 mm × 200 mm × 50 mm.

In some embodiments of the disclosure, the shielding cover is mounted to the vehicle body and covers the LiDAR and the LiDAR bracket.

In some embodiments of the disclosure, the vehicle further includes a rearview mirror assembly. The rearview mirror assembly includes a rearview mirror and a rearview mirror bracket, the rearview mirror is mounted to the rearview mirror bracket, and the rearview mirror bracket is fixedly mounted to a side of the shielding cover away from the LiDAR.

In some embodiments of the disclosure, the shielding cover defines an avoidance hole. The avoidance hole penetrates through the shielding cover in a thickness direction of the shielding cover. The vehicle further includes a rearview mirror assembly. The rearview mirror assembly includes a fitting member, a rearview mirror, and a rearview mirror bracket, the fitting member is fixedly mounted to the LiDAR bracket, the rearview mirror bracket is fixedly mounted to a face of the fitting member away from the LiDAR bracket, the rearview mirror bracket extends through the avoidance hole and protrudes out of the shielding cover, and the rearview mirror is mounted to the rearview mirror bracket.

In some embodiments of the disclosure, the vehicle further includes a rearview mirror assembly. The rearview mirror assembly is an electronic display screen embedded in the shielding cover.

In some embodiments of the disclosure, the vehicle further includes a camera assembly. The camera assembly is fixedly mounted to the vehicle body and located on at least one side of the LiDAR bracket.

In some embodiments of the disclosure, the vehicle further includes a camera assembly. The camera assembly includes a camera, the LiDAR is assembled together with the camera assembly, the LiDAR has a horizontal field of view HFOV-L, the camera has a horizontal field of view HFOV-C, and the horizontal field of view HFOV-L of the LiDAR has a coverage region on the window glass that at least partially overlaps with a coverage region of the horizontal field of view HFOV-C of the at least one camera on the window glass.

In some embodiments of the disclosure, the camera is selected from at least one of a standard camera, a narrow-angle camera, or a wide-angle camera, a horizontal field of view HFOV-C of the standard camera satisfies 40° ≤ HFOV-C ≤ 90°, a horizontal field of view HFOV-C of the narrow-angle camera is less than 40°, a horizontal field of view HFOV-C of the wide-angle camera is greater than 90°, and a horizontal field of view HFOV-L of the LiDAR satisfies 90° ≤ HFOV-L ≤ 160°.

With the aid of the LiDAR bracket provided in the disclosure, the LiDAR can be integrated inside the vehicle and located on an inside of the window glass, so as to avoid dust, gravel, and other external environmental factors from affecting detection of the LiDAR, thereby improving detection accuracy of the LiDAR and ensuring a relatively good detection effect of the LiDAR. At the same time, noise and vibration of the LiDAR during operation can be can further reduced, thereby meeting NVH performance requirements of the whole vehicle.

### BRIEF DESCRIPTION OF THE DRAWINGS

To more clearly illustrate the technical solutions of embodiments of the disclosure, the accompanying drawings required for describing the embodiments of the disclosure are briefly described hereinafter.
FIG. 1 is a schematic structural view of a vehicle provided in embodiments of the disclosure.
FIG. 2 is a partial cross-sectional schematic structural view of the vehicle in FIG. 1 according to a first embodiment.
FIG. 3 is a cross-sectional schematic structural view of the vehicle in FIG. 1 according to the first embodiment, viewed from another direction.
FIG. 4 is a schematic structural view of a LiDAR bracket of the vehicle in FIG. 3.
FIG. 5 is a top view of the LiDAR bracket in FIG. 4.
FIG. 6 is a front view of the LiDAR bracket in FIG. 4.
FIG. 7 is a right view of the LiDAR bracket in FIG. 4.
FIG. 8 is a left view of the LiDAR bracket in FIG. 4.
FIG. 9 is a partial schematic structural diagram of the vehicle in FIG. 1 according to a second embodiment.

### DETAILED DESCRIPTION

The technical solutions of embodiments of the disclosure will be clearly and completely described hereinafter with reference to the accompanying drawings of the embodiments of the disclosure.

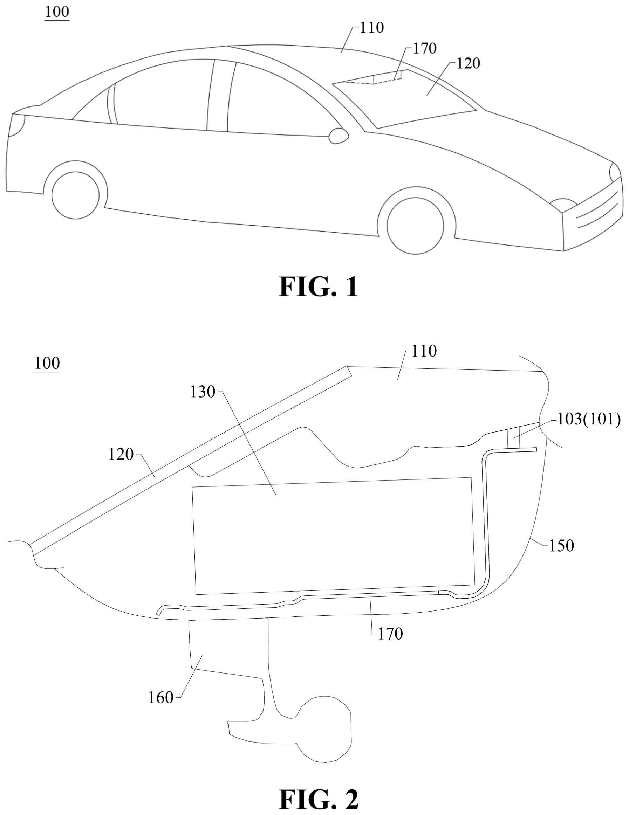

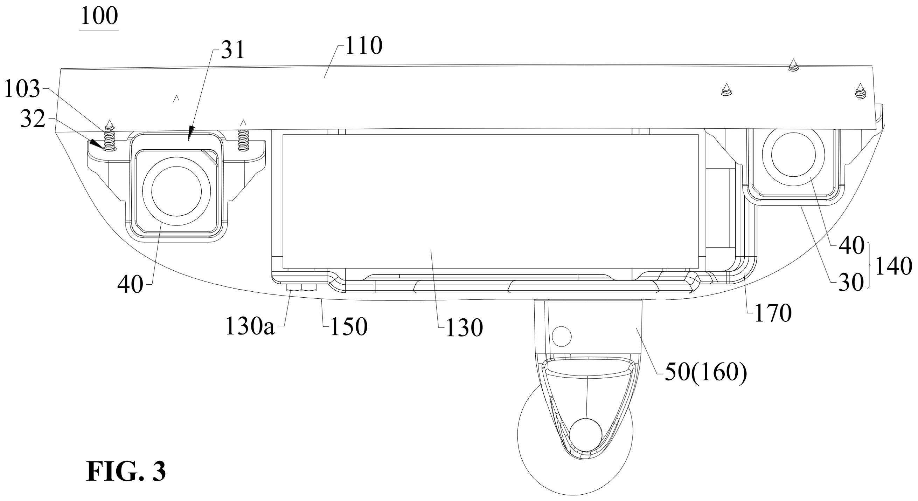

Refer to FIGS. 1 to 3. FIG. 1 is a schematic structural view of a vehicle 100 provided in the embodiments of the disclosure. FIG. 2 is a partial cross-sectional schematic structural view of the vehicle 100 in FIG. 1 according to a first embodiment. FIG. 3 is a cross-sectional schematic structural view of the vehicle 100 in FIG. 1 according to the first embodiment, viewed from another direction.

The vehicle 100 provided in the embodiments of the disclosure may, but is not limited to, be a sedan, a truck, a pickup truck, a business vehicle, a bus, or an off-road vehicle, which is not limited herein. The vehicle 100 includes a vehicle body 110, a window glass 120, a light detection and ranging (LiDAR) 130, a LiDAR bracket 170, a camera assembly 140, a shielding cover 150, and a rearview mirror assembly 160. The vehicle body 110 serves to provide a safe, comfortable, and convenient driving and riding environment for occupants inside the vehicle.

All the window glass 120, the LiDAR bracket 170, the camera assembly 140, and the shielding cover 150 are mounted to the vehicle body 110. The window glass 120 is mounted to an opening of the vehicle body 110. The vehicle body 110 and the window glass 120 cooperate to define an interior space of the vehicle. In the embodiments, the window glass 120 may, but is not limited to, be a front windshield, a rear windshield, a side window glass, an A-pillar glass, or a B-pillar glass. Exemplarily, the window glass 120 may be a front windshield. All the LiDAR 130, the LiDAR bracket 170, the camera assembly 140, and the shielding cover 150 are located inside the interior space of the vehicle.

Both the LiDAR 130 and the camera assembly 140 are important sensors of the vehicle 100. The LiDAR 130 is mounted to the LiDAR bracket 170 and faces the window glass 120. The LiDAR 130 is configured to emit detection signals through the window glass 120 and receive reflected detection signals through the window glass 120. Specifically, detection signals emitted by the LiDAR 130 may pass through the window glass 120 to detect an external environment of the vehicle 100, and part of detection signals reflected by objects in the external environment may pass through the window glass 120 again and be received by the LiDAR 130, so that the LiDAR 130 can perceive external environment information of the vehicle 100. A wavelength of the detection signal emitted by the LiDAR 130 may be, for example, 905 nm, 1550 nm, or the like. The camera assembly 140 is used to capture and identify external environment information of the vehicle 100, so as to implement functions such as vehicle recognition, pedestrian recognition, and lane line recognition. The shielding cover 150 is used to cover the LiDAR bracket 170, the LiDAR 130, and the camera assembly 140, so as to improve the aesthetic appearance inside the vehicle 100. The rearview mirror assembly 160 is fixedly mounted to the shielding cover 150. A passenger or a driver can obtain information about the environment behind the vehicle 100 through the rearview mirror assembly 160.

In the embodiments, the LiDAR bracket 170 is made of metal or thermoplastic resin. The metal may be a metallic material such as iron, zinc, aluminum, or stainless steel or alloy material thereof. Exemplarily, the LiDAR bracket 170 is made of zinc alloy. The thermoplastic resin may be a material such as polybutylene terephthalate (PBT), nylon 66 (PA66), or thermoplastic elastomer (TPE).

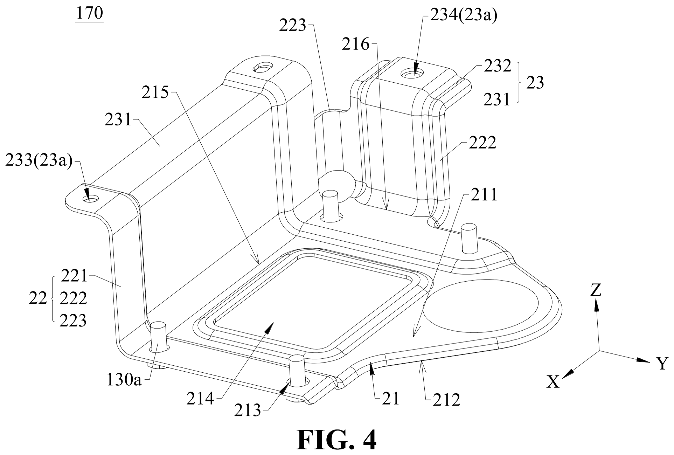

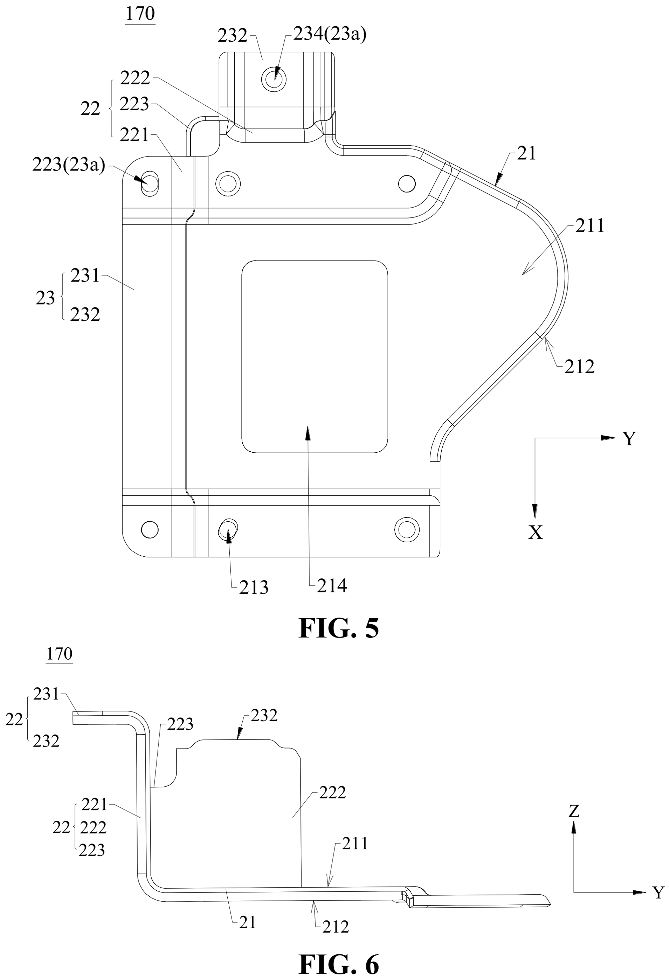

Refer to FIGS. 4 and 5. FIG. 4 is a schematic structural view of the LiDAR bracket 170 of the vehicle 100 in FIG. 3. FIG. 5 is a top view of the LiDAR bracket 170 in FIG. 4.

For ease of description, a forward direction of the vehicle 100 is defined as an X-axis direction, a width direction of the vehicle 100 is defined as a Y-axis direction, and a height direction of the vehicle 100 is defined as a Z-axis direction. The X-axis direction, the Y-axis direction, and the Z-axis direction are perpendicular to one another. A top view refers to viewing the LiDAR bracket 170 in a negative direction of the Z-axis. After the LiDAR 130 is mounted to the LiDAR bracket 170, the LiDAR 130 faces the window glass 120 in the X-axis direction.

The LiDAR bracket 170 includes a base plate 21, a side plate 22, and a fixing plate 23. The side plate 22 is fixedly connected to and located between the base plate 21 and the fixing plate 23. The side plate 22 is substantially perpendicular to the base plate 21. The fixing plate 23 is substantially perpendicular to the side plate 22. Preferably, the base plate 21, the side plate 22, and the fixing plate 23 are integrally formed. In other words, the base plate 21, the side plate 22, and the fixing plate 23 are integrally formed from a single metal plate through a stamping or forging process, or alternatively, integrally formed by a metal casting process or a resin injection molding process.

As illustrated in FIG. 4, one end of the side plate 22 is fixedly connected to a peripheral side face of the base plate 21, and the side plate 22 and the base plate 21 are arranged to surround and define a box space (not illustrated). The LiDAR 130 is fixedly connected to the base plate 21 and received within the box space. Specifically, a bottom face of the LiDAR 130 is fixed to the base plate 21, and a side face of the LiDAR 130 may abut against the side plate 22, such that the LiDAR 130 is fixedly mounted and protected from external damage through the base plate 21 and the side plate 22.

In the embodiments, the base plate 21 includes a first face 211, a second face 212, and a peripheral side face (not illustrated). In a thickness direction of the base plate 21 (i.e., the Z-axis direction as illustrated in the accompanying drawings), the first face 211 is opposite to the second face 212. The first face 211 is used to carry the LiDAR 130. A ratio of an area of the first face 211 to an area of a face of the LiDAR 130 facing the first face 211 ranges from 0.5 to 1.5, so as to ensure that the base plate 21 can stably support the LiDAR 130. The peripheral side face is connected to and located between the first face 211 and the second face 212. The peripheral side face may include a first side face 215 and a second side face 216. Exemplarily, the second side face 216 is arranged adjacent to the first side face 215. In some other embodiments, the first side face 215 and the second side face 216 may be arranged opposite to and spaced apart from each other in a width direction of the base plate 21.

The base plate 21 further defines at least three mounting through-holes 213 and at least one vibration-damping through-hole 214. Each of the mounting through-hole 213 and the vibration-damping through-hole 214 penetrates through the first face 211 and the second face 212 of the base plate 21 in the thickness direction of the base plate 21 (i.e., the Z-axis direction as illustrated in the accompanying drawings). Each of the mounting through-holes 213 is spaced apart from the vibration-damping through-hole 214. The at least three mounting through-holes 213 are arranged along a periphery of the base plate 21 and are spaced apart from each other. The vibration-damping through-hole 214 is disposed at the middle of the base plate 21. It may be understood that, on the one hand, by providing the vibration-damping through-hole 214 in the base plate 21, the weight of the LiDAR bracket 170 can be reduced. On the other hand, since the LiDAR 130 may generate vibration at a certain frequency during operation, the provision of the vibration-damping through-hole 214 in the base plate 21 can prevent resonance between the LiDAR 130 and the LiDAR bracket 170, thereby achieving vibration damping and noise reduction effects.

In some embodiments, a ratio of an area of an opening of the vibration-damping through-hole 214 to an area of the first face 211 of the base plate 21 ranges from 1/4 to 2/3. In the embodiments, the ratio of the area of the opening of the vibration-damping through-hole 214 to the area of the first face 211 of the base plate 21 may be adjusted according to a noise, vibration, and harshness (NVH) performance value measured for the LiDAR 130. Preferably, in the case where the NVH performance value of the LiDAR 130 is equal to or greater than 25 dB, the ratio of the area of the opening of the vibration-damping through-hole 214 to the area of the first face 211 of the base plate 21 ranges from 1/2 to 2/3. Preferably, in the case where the NVH performance value of the LiDAR 130 is less than 25 dB, the ratio of the area of the opening of the vibration-damping through-hole 214 to the area of the first face 211 of the base plate 21 ranges from 1/4 to 1/2. It may be noted that NVH is an acronym for Noise, Vibration, and Harshness. The NVH performance value of the LiDAR 130 refers to a comprehensive value of various indices such as noise, vibration, and harshness.

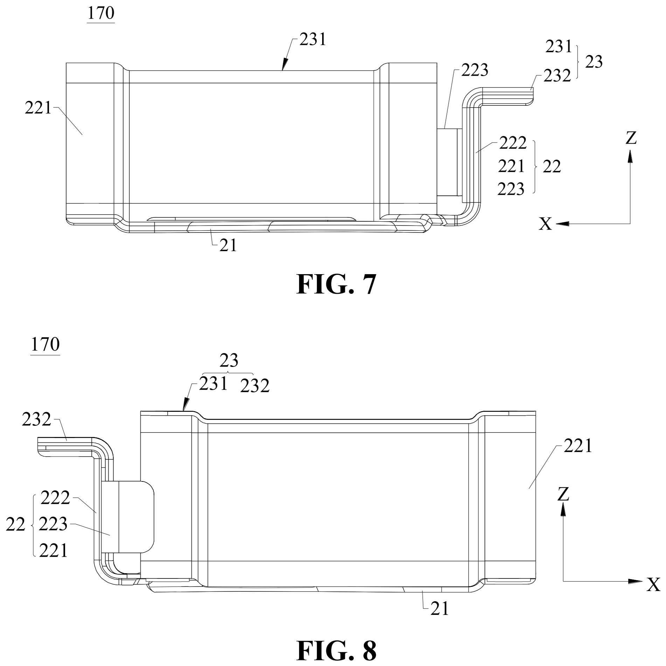

Refer to FIGS. 6 to 8. FIG. 6 is a front view of the LiDAR bracket 170 in FIG. 4. FIG. 7 is a right view of the LiDAR bracket 170 in FIG. 4. FIG. 8 is a left view of the LiDAR bracket 170 in FIG. 4.

One end of the side plate 22 is fixedly connected to the peripheral side face of the base plate 21 and extends in a peripheral direction of the base plate 21. The side plate 22 and the base plate 21 are arranged to surround and define the box space (not illustrated). The side plate 22 includes a first side sub-plate 221, a second side sub-plate 222, and a third side sub-plate 223. The first side sub-plate 221 is fixedly connected to the first side face 215 of the base plate 21, and the second side sub-plate 222 is fixedly connected to the second side face 216 of the base plate 21. The third side sub-plate 223 is fixedly connected to and located between the first side sub-plate 221 and the second side sub-plate 222 and is spaced apart from the base plate 21. It may be understood that, since the third side sub-plate 223 is spaced apart from the base plate 21, the weight of the LiDAR bracket 170 can be reduced, and it also facilitates the integral forming of the LiDAR bracket 170.

The fixing plate 23 is fixedly connected to another end of the side plate 22 away from the base plate 21. The fixing plate 23 extends in a direction away from the box space. Exemplarily, in the thickness direction of the side plate 22, the fixing plate 23 extends in a direction away from the base plate 21. The fixing plate 23 is used to be fixedly connected to the inside of the vehicle body 110 of the vehicle 100. The fixing plate 23 includes a first fixing plate 231 and a second fixing plate 232. The first fixing plate 231 is fixedly connected to another end of the first side sub-plate 221 away from the base plate 21. The first fixing plate 231 extends in the direction away from the box space. Exemplarily, in a thickness direction of the first side sub-plate 221 (i.e., the X-axis direction as illustrated in the accompanying drawings), the first fixing plate 231 extends in a direction away from the first side sub-plate 221. The second fixing plate 232 is fixedly connected to another end of the second side sub-plate 222 away from the base plate 21. The second fixing plate 232 extends in the direction away from the box space. Exemplarily, in the thickness direction of the second side sub-plate 222 (i.e., the Y-axis direction as illustrated in the accompanying drawings), the second fixing plate 232 extends in a direction away from the second side sub-plate 222.

The fixing plate 23 further defines multiple fixing holes 23a, which correspond one-to-one with multiple mating holes of the vehicle body 110. Specifically, the multiple fixing holes 23a include at least one first fixing hole 233 and at least two second fixing holes 234. The at least one first fixing hole 233 is located at the first fixing plate 231. Each first fixing hole 233 penetrates through the first fixing plate 231 in a thickness direction of the first fixing plate 231 (i.e., the Z-axis direction as illustrated in the accompanying drawings). Each first fixing hole 233 is in communication with a first mating hole of the vehicle body 110. Exemplarily, there are two first fixing holes 233. The two first fixing holes 233 are spaced apart in a length direction of the first fixing plate 231 (i.e., the Y-axis direction as illustrated in the accompanying drawings). In some other embodiments, the number of the first fixing holes 233 may be one, three, or more than three.

The at least one second fixing hole 234 is located at the second side sub-plate 222. Each second fixing hole 234 penetrates through the second fixing plate 232 in a thickness direction of the second fixing plate 232 (i.e., the Z-axis direction as illustrated in the accompanying drawings). Each second fixing hole 234 is in communication with a second mating hole of the vehicle body 110. Exemplarily, there is one second fixing hole 234. In some other embodiments, the number of the second fixing holes 234 may be two or more.

Refer to FIG. 2 and FIG. 3. When the LiDAR 130 is mounted to the LiDAR bracket 170, the LiDAR 130 is fixedly connected to the base plate 21 and received within the box space. Specifically, the LiDAR 130 is fixedly connected to the first face 211 of the base plate 21 and at least partially covers the vibration-damping through-hole 214. Exemplarily, the LiDAR 130 is detachably mounted to the first face 211 of the base plate 21. In the embodiments, the LiDAR 130 is substantially in a shape of cube, and its housing is made of a metal material. Exemplarily, a laser wavelength of the LiDAR 130 may be 1550 nm or 905 nm. In addition, a weight of the LiDAR 130 is equal to or greater than 500 g, and/or a volume of the LiDAR 130 is equal to or greater than that defined by 300 mm × 200 mm × 50 mm. The LiDAR 130 is used to detect external environmental information of the vehicle 100.

The LiDAR 130 defines at least three assembly holes (not illustrated), which are arranged around a periphery of the LiDAR 130 and are spaced apart from each other. Each assembly hole is in communication with one first fixing hole 233 of the LiDAR bracket 170. Exemplarily, there are four assembly holes.

The vehicle 100 further includes at least three mounting members 130a, which are used to secure the LiDAR 130 to the LiDAR bracket 170. Each mounting member 130a is mounted to one mounting through-hole 213 of the base plate 21 and one assembly hole of the LiDAR 130. In the embodiments, the at least three mounting members 130a may be bolts or screws. It may be understood that screw connection and bolt connection both belong to threaded connections. In other words, the LiDAR 130 may be connected and secured to the LiDAR bracket 170 through a threaded connection. It may be understood that the threaded connection has advantages such as easy installation, convenient disassembly, and simple operation, which facilitates a detachable connection between the LiDAR 130 and the LiDAR bracket 170. For example, in the case where the LiDAR 130 is secured to the LiDAR bracket 170 through a bolt connection, vibration-damping bolts are usually used. It may be understood that a vibration-damping bolt consists of two studs and a rubber column. The rubber column is disposed between the two studs, and the two studs are coaxially arranged. Each stud has a stud head larger than its diameter, and the stud head is embedded in the rubber column. An end face of the stud head close to threads is flush with or slightly protrudes from the end face of the rubber column. In addition, the rubber column may be sufficiently large or thick. When subjected to an external force, the rubber column undergoes plastic deformation to absorb the energy of the external force, while the stud, having high strength and rigidity, can withstand the deformation and impact of the external force, thereby preventing resonance between the LiDAR 130 and the LiDAR bracket 170 and achieving a vibration-damping effect.

In some other embodiments, the LiDAR 130 may be secured to the LiDAR bracket 170 through riveting, and the LiDAR bracket 170 may be secured to the vehicle body 110 through riveting. It may be understood that riveting is a fastening method of connecting parts or assemblies of a metal structure together with rivets. Commonly used rivets include closed-end round head blind rivets, closed-end countersunk head blind rivets, open-end round head blind rivets, and open-end countersunk head blind rivets.

In the embodiments, after the LiDAR 130 is mounted to the LiDAR bracket 170 through the mounting members 130a, the LiDAR bracket 170 is fixedly mounted at an appropriate position inside the passenger compartment of the vehicle body 110 of the vehicle 100, for example, fixedly mounted to a roof beam. Both the first fixing plate 231 and the second fixing plate 232 of the LiDAR bracket 170 are fixedly connected to the inside of the vehicle body 110 of the vehicle 100. Exemplarily, both the first fixing plate 231 and the second fixing plate 232 of the LiDAR bracket 170 are in contact with the roof beam of the vehicle body 110.

In addition, the vehicle 100 further includes multiple fixing members 101. The multiple fixing members 101 are used to fix the LiDAR bracket 170 to the vehicle body 110. Each fixing member 101 is mounted to one fixing hole 23a of the LiDAR bracket 170. Specifically, the fixing members 101 include at least one first fixing member 102 and at least one second fixing member (not illustrated). Exemplarily, the at least one first fixing member 102 and the at least one second fixing member may both be bolts. Specifically, each first fixing member 102 is mounted to one first fixing hole 233 of the first fixing plate 231, and each second fixing member is mounted to one second fixing hole 234 of the second fixing plate 232.

Refer to FIG. 3. In the embodiments, the camera assembly 140 is located on at least one side of the LiDAR bracket 170 and is spaced apart from the LiDAR bracket 170. The camera assembly 140 includes a camera bracket 30 and a camera 40 mounted to the camera bracket 30. The camera bracket 30 defines an accommodating cavity 31, which is used for accommodating the camera 40. The shape of the accommodating cavity 31 may be determined according to the outer contour of the camera 40. The camera bracket 30 further defines at least three mounting holes 32. Each mounting hole 32 is in communication with one fastening hole of the vehicle body 110. Exemplarily, there are two camera assemblies 140, and the two camera assemblies 140 are arranged on two opposite sides of the LiDAR bracket 170 at an interval. Specifically, the two camera brackets 30 are arranged on opposite sides of the LiDAR bracket 170 at an interval. In some other embodiments, the camera bracket 30 may be fixedly connected to the LiDAR bracket 170.

In the embodiments, the vehicle 100 further includes multiple fasteners 103. The multiple fasteners 103 are used to fix the camera bracket 30 to the vehicle body 110, thereby fixing the camera assembly 140 to the vehicle body 110. Exemplarily, the multiple fasteners 103 may be screws. Specifically, each fastener 103 is mounted to one mounting hole 32 of the camera bracket 30. In this arrangement, the LiDAR 130 and the camera assembly 140 may be assembled together, so that the LiDAR 130 may be used in cooperation with the camera 40, thereby obtaining more comprehensive surrounding environment information of the vehicle 100 and further improving the performance of the vehicle 100.

The LiDAR 130 and the camera 40 each have their own field of view (FOV). The FOV is the maximum field range for acquiring image data and may be divided into a horizontal field of view (HFOV) and a vertical field of view (VFOV). The camera 40 may be selected from at least one of a standard camera, a narrow-angle camera, or a wide-angle camera. A horizontal field of view HFOV-C of the standard camera satisfies 40° ≤ HFOV-C ≤ 90°. A horizontal field of view HFOV-C of the narrow-angle camera satisfies HFOV-C < 40°. A horizontal field of view HFOV-C of the wide-angle camera satisfies HFOV-C > 90°. A horizontal field of view HFOV-L of the LiDAR 130 satisfies 90° ≤ HFOV-L ≤ 160°, for example, 90°, 100°, 120°, 140°, or 160°.

As illustrated in FIG. 3, the LiDAR 130 is located between two cameras 40. The horizontal field of view HFOV-L of the LiDAR 130 may have a coverage region on the window glass 120 that does not overlap with a coverage region of the horizontal field of view HFOV-C of any of the cameras 40 on the window glass 120. For example, the horizontal field of view HFOV-L of the LiDAR 130 may be equal to 90°, both cameras 40 may be narrow-angle cameras having a horizontal field of view HFOV-C of 28°.

In some other embodiments, the horizontal field of view HFOV-L of the LiDAR 130 may have a coverage region on the window glass 120 that at least partially overlaps with a coverage region of the horizontal field of view HFOV-C of at least one camera 40 on the window glass 120. For example, the horizontal field of view HFOV-L of the LiDAR 130 may be equal to 120°, and one of the two cameras 40 may be a standard camera having a horizontal field of view HFOV-C of 90° or a wide-angle camera having a horizontal field of view HFOV-C of 120°.

In still other embodiments, the horizontal field of view HFOV-L of the LiDAR 130 may have a coverage region on the window glass 120 that at least partially overlaps with a coverage region of the horizontal field of view HFOV-C of each of the two cameras 40 on the window glass 120. For example, the horizontal field of view HFOV-L of the LiDAR 130 may be equal to 160°, one of the two cameras 40 may be a standard camera having a horizontal field of view HFOV-C of 90°, and the other of the two cameras 40 may be a wide-angle camera having a horizontal field of view HFOV-C of 120°.

In the embodiments, the shielding cover 150 may be made of plastics such as polypropylene (PP), polybutylene terephthalate (PBT), or nylon 66 (PA66). Exemplarily, the material of the shielding cover 150 may be polypropylene (PP). The rearview mirror assembly 160 is fixedly mounted to one side of the shielding cover 150 away from the LiDAR bracket 170 and the camera assembly 140. Specifically, the rearview mirror assembly 160 includes a rearview mirror bracket 50 and a rearview mirror (not illustrated). The rearview mirror is mounted to the rearview mirror bracket 50. The rearview mirror bracket 50 is fixedly mounted to one side of the shielding cover 150 away from the LiDAR 130 and the camera assembly 140. Exemplarily, the rearview mirror bracket 50 is made of zinc alloy. The rearview mirror bracket 50 may be fixedly connected to the shielding cover 150 via adhesive tape. In other embodiments, the rearview mirror bracket 50 may be fixedly connected to the shielding cover 150 through a threaded connection, which is not limited herein.

In other embodiments, the rearview mirror assembly 160 may be an electronic display screen. The electronic display screen is embedded in the shielding cover 150. The electronic display screen may be configured to display images and allow passengers or the driver to obtain information about environmental behind the vehicle 100. In this configuration, the electronic display screen may serve as a rearview mirror, such that no additional rearview mirror needs to be installed inside the vehicle 100, thereby saving installation space inside the vehicle 100.

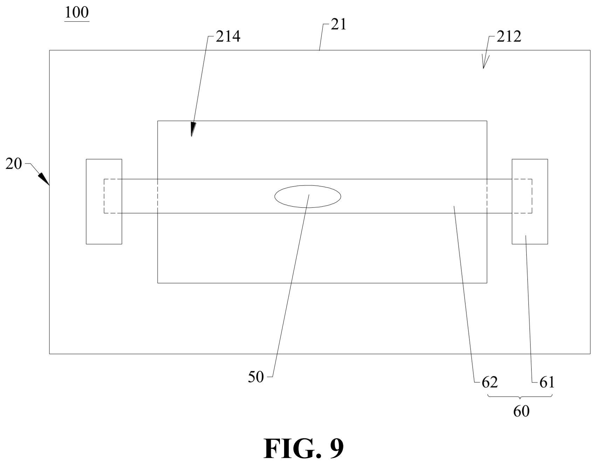

Refer to FIG. 9. FIG. 9 is a partial schematic structural diagram of the vehicle 100 in FIG. 1 according to a second embodiment.

A difference between the vehicle 100 illustrated in FIG. 9 and the vehicle 100 illustrated in the first embodiment lies in that the rearview mirror assembly 160 in FIG. 9 further includes a fitting member 60 fixedly mounted to the LiDAR bracket 170. Specifically, the fitting member 60 is fixedly mounted to the second face 212 of the base plate 21. In this embodiment, the fitting member 60 may be made of a metal material. Exemplarily, the fitting member 60 may be made of cast aluminum alloy. The fitting member 60 is used for mounting of the rearview mirror bracket 50. Specifically, the fitting member 60 includes two fixing portions 61 and an assembling portion 62. The two fixing portions 61 are fixedly connected to the second face 212 of the base plate 21 and are spaced apart from each other on two opposite sides of the vibration-damping through-hole 214 of the base plate 21. The assembling portion 62 is fixedly connected to and located between the two fixing portions 61.

In this embodiments, the shielding cover (not illustrated in FIG. 9) defines an avoidance hole (not illustrated). The avoidance hole penetrates through the shielding cover in a thickness direction of the shielding cover and exposes the fitting member 60. The avoidance hole is configured for the rearview mirror bracket 50 to extend through. The rearview mirror bracket 50 is fixedly mounted to a face of the fitting member 60 away from the LiDAR bracket 170. The rearview mirror bracket 50 extends through the avoidance hole of the shielding cover and protrudes out of the shielding cover. Specifically, the rearview mirror bracket 50 is fixedly mounted to a face of the fitting member 60 away from the second face 212 of the base plate 21. In this configuration, the rearview mirror assembly 160 may be integrated with the LiDAR bracket 170, thereby reducing a length of a portion of the rearview mirror bracket 50 that extends beyond the shielding cover and saving installation space inside the vehicle 100.

With the aid of the LiDAR bracket 170 provided in the disclosure, the LiDAR 130 can be integrated inside the vehicle 100 and located on an inside of the window glass 120, so as to avoid dust, gravel, and other external environmental factors from affecting detection of the LiDAR 130, thereby improving detection accuracy of the LiDAR 130 and ensuring a relatively good detection effect of the LiDAR 130. At the same time, the noise and vibration of the LiDAR 130 during operation may be reduced, thereby meeting the NVH performance requirements of the whole vehicle 100. In addition, in the case where the LiDAR bracket 170 is made of a metal material, since the housing of the LiDAR 130 and the vehicle body 110 are also made of metal materials, heat accumulated inside the shielding cover 150 may be conducted through the housing of the LiDAR 130 to the LiDAR bracket 170, then to the vehicle body 110, and finally to the external environment, where it is carried away by airflow, thereby enabling a heat dissipation function of the LiDAR bracket 170.

The embodiments of the disclosure have been described in detail above. Specific examples have been applied herein to illustrate the principles and implementation manners of the disclosure. The description of the above embodiments is merely intended to assist in understanding the methods and core ideas of the disclosure. For those of ordinary skill in the art, modifications may be made to the specific implementation manners and application scopes based on the concepts of the disclosure. In summary, the content of this specification may not be construed as limiting the disclosure.

## Claims

1. A LiDAR bracket for mounting of a LiDAR located inside a vehicle, wherein the LiDAR bracket comprises a base plate, a side plate, and a fixing plate, wherein one end of the side plate is fixedly connected to a peripheral side face of the base plate, the side plate and the base plate are arranged to surround and define a box space, the fixing plate is fixedly connected to another end of the side plate away from the base plate, the fixing plate extends in a direction away from the box space, the LiDAR is operable to be fixedly connected to the base plate and received within the box space, and the fixing plate is configured to be fixedly connected to an inside of a vehicle body of the vehicle.

2. The LiDAR bracket according to claim 1, wherein
the peripheral side face of the base plate comprises a first side face and a second side face, and the side plate comprises a first side sub-plate and a second side sub-plate, wherein the first side sub-plate is fixedly connected to the first side face, and the second side sub-plate is fixedly connected to the second side face;
the fixing plate comprises a first fixing plate and a second fixing plate, wherein the first fixing plate is fixedly connected to another end of the first side sub-plate away from the base plate, the first fixing plate extends in the direction away from the box space, the second fixing plate is fixedly connected to another end of the second side sub-plate away from the base plate, and the second fixing plate extends in the direction away from the box space; and
when the LiDAR bracket is mounted to the vehicle, both the first fixing plate and the second fixing plate are fixedly connected to the inside of the vehicle body of the vehicle.

3. The LiDAR bracket according to claim 2, wherein the side plate further comprises a third side sub-plate, the third side sub-plate being fixedly connected to and located between the first side sub-plate and the second side sub-plate and spaced apart from the base plate.

4. The LiDAR bracket according to claim 1, wherein the base plate further comprises a first face, a second face, and a vibration-damping through-hole, the vibration-damping through-hole penetrating through the first face and the second face, the LiDAR being fixedly connected to the first face and at least partially covering the vibration-damping through-hole.

5. The LiDAR bracket according to claim 4, wherein a ratio of an area of the vibration-damping through-hole to an area of the first face ranges from 1/4 to 2/3.

6. The LiDAR bracket according to claim 4, wherein a noise, vibration, and harshness (NVH) performance value measured for the LiDAR is greater than or equal to 25 dB, and a ratio of an area of the vibration-damping through-hole to an area of the first face ranges from 1/2 to 2/3.

7. The LiDAR bracket according to claim 4, wherein a noise, vibration, and harshness (NVH) performance value measured for the LiDAR is less than 25 dB, and a ratio of an area of the vibration-damping through-hole to an area of the first face ranges from 1/4 to 1/2.

8. The LiDAR bracket according to claim 4, wherein a ratio of an area of the first face to an area of a face of the LiDAR facing the first face ranges from 0.5 to 1.5.

9. The LiDAR bracket according to claim 1, wherein the side plate is substantially perpendicular to the base plate, and the fixing plate is substantially perpendicular to the side plate.

10. The LiDAR bracket according to claim 1, wherein the LiDAR bracket is made of metal or thermoplastic resin, and the base plate, the side plate, and the fixing plate are integrally formed.

11. The LiDAR bracket according to claim 1, wherein the base plate further defines at least three mounting through-holes, the at least three mounting through-holes being arranged along a periphery of the base plate and spaced apart from each other, and each of the at least three mounting through-holes penetrating through the base plate in a thickness direction of the base plate.

12. A vehicle, comprising a vehicle body, a window glass, a LiDAR, and the LiDAR bracket according to any one of claims 1 to 11, wherein the LiDAR bracket is mounted to the inside of the vehicle body, the window glass is mounted to an opening of the vehicle body, the LiDAR is mounted to the LiDAR bracket, the LiDAR faces the window glass, and the LiDAR is configured to emit detection signals through the window glass and receive reflected detection signals through the window glass.

13. The vehicle according to claim 12, wherein a weight of the LiDAR is greater than or equal to 500 g, and/or a volume of the LiDAR is greater than or equal to that defined by 300 mm × 200 mm × 50 mm.

14. The vehicle according to claim 12, further comprising a shielding cover, wherein the shielding cover is mounted to the vehicle body and covers the LiDAR and the LiDAR bracket.

15. The vehicle according to claim 14, further comprising a rearview mirror assembly, wherein the rearview mirror assembly comprises a rearview mirror and a rearview mirror bracket, the rearview mirror is mounted to the rearview mirror bracket, and the rearview mirror bracket is fixedly mounted to a side of the shielding cover away from the LiDAR.

16. The vehicle according to claim 14, wherein
the shielding cover defines an avoidance hole, wherein the avoidance hole penetrates through the shielding cover in a thickness direction of the shielding cover; and
the vehicle further comprises a rearview mirror assembly, wherein the rearview mirror assembly comprises a fitting member, a rearview mirror, and a rearview mirror bracket, the fitting member is fixedly mounted to the LiDAR bracket, the rearview mirror bracket is fixedly mounted to a face of the fitting member away from the LiDAR bracket, the rearview mirror bracket extends through the avoidance hole and protrudes out of the shielding cover, and the rearview mirror is mounted to the rearview mirror bracket.

17. The vehicle according to claim 14, further comprising a rearview mirror assembly, wherein the rearview mirror assembly is an electronic display screen embedded in the shielding cover.

18. The vehicle according to claim 12, further comprising a camera assembly, wherein the camera assembly is fixedly mounted to the vehicle body and located on at least one side of the LiDAR bracket.

19. The vehicle according to claim 12, further comprising a camera assembly, wherein the camera assembly comprises a camera, the LiDAR is assembled together with the camera assembly, the LiDAR has a horizontal field of view HFOV-L, the camera has a horizontal field of view HFOV-C, and the horizontal field of view HFOV-L of the LiDAR has a coverage region on the window glass that at least partially overlaps with a coverage region of the horizontal field of view HFOV-C of the at least one camera on the window glass.

20. The vehicle according to claim 19, wherein the camera is selected from at least one of a standard camera, a narrow-angle camera, or a wide-angle camera, a horizontal field of view HFOV-C of the standard camera satisfying 40° ≤ HFOV-C ≤ 90°, a horizontal field of view HFOV-C of the narrow-angle camera being less than 40°, a horizontal field of view HFOV-C of the wide-angle camera being greater than 90°, and a horizontal field of view HFOV-L of the LiDAR satisfying 90° ≤ HFOV-L ≤ 160°.
